# EUROPEAN PATENT APPLICATION

(11) **EP 2 019 217 A2**
(43) Date of publication of application: **28.01.2009**
(21) Application number: 08013264.0
(22) Date of filing: 23.07.2008
(51) Int. Cl.: F16C 9/00, F16C 19/46, F16C 33/60

(54) **Split bearing**

(30) Priority: 25.07.2007 JP 2007192999; 31.08.2007 JP 2007225642
(71) Applicant: JTEKT Corporation, Osaka-shi Osaka 542-8502 (JP)
(72) Inventor: Iwata, Takashi, Osaka-shi, Osaka 542-8502 (JP); Waseda, Yoshitaka, Osaka-shi, Osaka 542-8502 (JP)
(74) Representative: Schaeberle, Steffen

(57) **Abstract**

A split bearing which is divided in two is formed of a rolling bearing (20), and its outer ring (22) is provided with ribs (24) at both side parts thereof in an axial direction. An integrating mechanism is provided at a position within a range in the axial direction where this rib (24) is formed. The integrating mechanism include a concave groove (26) in an annular shape which is formed on a side surface of the rib, and a C-shaped ring (28) is engaged with this concave groove, whereby upper and lower split outer ring pieces (22) of the divided outer ring are integrated into a preassembled state.

## Description

### BACKGROUND OF THE INVENTION

The present invention relates to a split bearing. Particularly, the invention relates to the split bearing which is applied to a crank journal of a crankshaft and a large end of a con-rod or a connecting rod in an internal combustion engine, and specifically, to the split bearing which has an outer ring provided with ribs and, and to the split bearing which has rolling elements provided on an inner peripheral part of an outer ring, and a cage for holding the rolling elements.

A crankshaft in an internal combustion engine which is mounted on a vehicle such as an automobile is usually formed as a crankshaft of an integral type having a crank shape. A bearing of an integral type cannot be employed for a crank journal of this crankshaft or a bearing part at a large end of a con-rod, because of the particular crank shape of the crankshaft. For this reason, a split bearing which has been divided into two portions in a circumferential direction has been employed.

As the split bearing, a slide bearing has been usually employed conventionally. This slide bearing which is formed as the split bearing is mounted to the bearing part of the crankshaft after preassembled, and transported or so, in this preassembled state, for the purpose of assembling the internal combustion engine. In this case, an integrating mechanism is applied to the slide bearing formed as the split bearing so that the divided portions may not be separated in the state preassembled to the bearing part of the crankshaft. With the integrating mechanism, the split bearing will not be detached, when the split bearing is transported to an assembling station of the internal combustion engine, after it has been preassembled to the crankshaft.

As the integrating mechanism, there has been such a structure as disclosed in Japanese Patent Publication No. JP-A-6-81846 and Japanese Patent Publication No. JP-A-6-109025, for example, wherein an annular groove is formed on an outer peripheral surface of the divided split bearing across the divided portions, and a connecting member such as a snap ring is fitted in this groove thereby to integrate the split bearing. In this manner, the split bearing which has been divided can be integrated in the state preassembled to the bearing part of the crankshaft, and will not be detached during transportation or so.

Recently, in view of improving fuel cost performance of the internal combustion engine, it has been required to decrease bearing resistance against the above described bearing part of the crankshaft in the internal combustion engine to a minimum, and it has been considered that a rolling bearing which has less bearing resistance be employed, as the bearing.

In case of employing this rolling bearing, the outer ring cannot be made so thick in thickness, in case where it is desired to form the outer ring within the same width as a width of a thickness in a radial direction of the slide bearing which has been conventionally employed. Therefore, there is such a problem that it is very difficult to provide the conventional integrating mechanism on the outer ring.

Specifically, the rolling bearing includes an outer ring, an inner ring, a rolling element interposed between the outer ring and the inner ring, and a holding inner ring for holding the rolling element according to necessity. Even in case where an outer peripheral surface of the bearing part is utilized as the inner ring, the outer ring and the rolling element are necessary as constituting members. Accordingly, the width of the thickness for forming the outer ring is inevitably made smaller than the width of the thickness of the conventional slide bearing, and so, it is difficult to incorporate the integrating mechanism of forming a groove or the like in this thin outer ring. Even though the integrating mechanism has been incorporated, there is such anxiety that rolling performance would be badly affected.

Under the circumstances, the inventor has paid attention to a rib of the outer ring which can secure the thickness at the same level as the conventional slide bearing, as the outer ring of the rolling bearing. [0003-2]

Further, in case of the rolling bearing, rolling elements such as needle rollers and a cage for holding these rolling elements are used, in addition to the outer ring. Therefore, in case where this rolling bearing having a large number of components is integrated by the conventional integrating mechanism as described above, there is such inconvenience that the integrating work is considerably annoying. Specifically, after the outer ring of the split bearing has been mounted to a shaft to which the outer ring is to be assembled, the integrating work of fitting the connecting member such as the stop ring to the outer ring must be conducted, while a worker holds the outer ring with hands. There is such inconvenience that this integrating work is considerably annoying. Therefore, it is necessary, according to case, to conduct this integrating work by two workers, in some cases.

### SUMMARY OF THE INVENTION

In view of the above, the problem to be solved by the invention is to provide an integrating mechanism in a shape of a groove which has been incorporated using a rib of an outer ring, even in case where a rolling bearing is employed as a split bearing, so that the split bearing can be preassembled to a bearing part so as not to be detached.

[0004-2] Further, the problem to be solved by the invention is to provide means for enabling integrating work to be easily conducted by only one worker, when an outer ring which is divided in two is assembled, by rendering the outer ring to be automatically held with respect to a radial direction by the cage which has been mounted to a shaft to which the cage is to be mounted, so as not to be detached, even in case where a rolling bearing is employed as a split bearing.

In order to attain the above described obj ect, the present invention provides the following arrangements.
(1) A split bearing comprising:
   a pair of split outer ring pieces to be integrated in a circumferential direction to form an outer ring which includes ribs in axial opposite side parts thereof; and
   an integrating mechanism for integrating the pair of split outer ring pieces to form the outer ring in a state reassembled to a shaft to which the outer ring is to be assembled, the integrating mechanism being provided at a position within a range in the axial direction where the rib of the outer ring is formed.
(2) The split bearing according to (1), wherein
   the integrating mechanism includes a concave groove in an annular shape which is formed on a side surface of said rib of the outer ring, and a connecting member to be engaged with the concave groove to integrate the split outer ringpieces to form the outer ring.
(3) The split bearing according to (2), wherein the connecting member is a C-shaped ring.
(4) The split bearing according to (1), wherein
   the integrating mechanism includes a concave groove which is formed partially in a circumferential direction on an outer peripheral surface of the rib across a dividing position between the split outer ring pieces, and a connecting member to be inserted into the concave groove to integrate the split outer ring pieces to form the outer ring.
(5) The split bearing according to (4), wherein the connecting member is a split tube.
(6) The split bearing according to (1), wherein the shaft is a crank journal of a crankshaft or a bearing part at a large end of a con-rod in an internal combustion engine.
(7) A split bearing comprising:
   a pair of split outer ring pieces to be integrated in a circumferential direction to form an outer ring; and
   an elastically deformable dual ended cylindrical cage for holing rolling elements, the cage being arranged on an inner peripheral part of the outer ring and being integrated with the outer ring in a state preassembled to a shaft to which the outer ring is to be assembled,
   wherein the cage is provided at an axial side position of the cage with a lock part for radially clamping axial ends of the split outer ring pieces to be integrated to form the outer ring.
(8) The split bearing according to (7), wherein
   the lock part is formed so as to extend radially outwardly from the axial side position of the cage and includes a hook-shapedportion for radially inwardly restricting an outer peripheral surface of a side part of the outer ring.
(9) The split bearing according to (7), wherein a side part of the outer ring which is clamped by the lock part includes a steppedpart which is cut away inwardly in the radial direction, and a maximum outside size of the lock part is substantially equal to or less than a maximum outside size of the outer ring in a state where the outer ring is clamped by the lock part.
(10) The split bearing according to (7), wherein a plurality of the lock parts are provided at axial opposite sides of the cage.
(11) The split bearing according to (1), wherein the shaft is a crank journal of a crankshaft or a bearing part at a large end of a con-rod in an internal combustion engine.

According to the invention, the integrating mechanism of the split bearing is provided on the rib of the outer ring. Therefore, even in case where the rolling bearing is employed as the split bearing, the integrating mechanism can be easily and reliably incorporated, without badly affecting the rolling performance of the rolling bearing itself, and the split bearing can be preassembled to the bearing part so as not to be detached.

Then, according to the invention, because the integrating mechanism of the split bearing are provided on the side surface of the rib, the outer peripheral surface of the outer ring can be made flush, and the outer ring can be accurately incorporated into the bearing part. Moreover, the integrating mechanism is highly reliable, because the integrating mechanism has a simple structure including the concave groove and the connecting member such as the C-shaped ring.

Then, according to the invention, because the concave groove for providing the integrating mechanism is formed on the outer peripheral surface of the outer ring, the work can be easily conducted. Moreover, because the concave groove of the integrating mechanism is formed on the outer peripheral surface partially in the circumferential direction, only a smaller amount of the work is required.

According to the invention, it is possible to favorably apply the split bearing in a form of the rolling bearing to the crank journal of the crankshaft or the bearing part at the large end of the con-rod in the internal combustion engine.

[0011-2] According to the invention, the integrating work of the outer ring can be conducted by only one worker, because the outer ring can be automatically held with respect to the radial direction by the cage which has been mounted so as not to be detached. As the results, it is possible to preassemble the split bearing to the bearing part so as not to be detached.

According to the invention, when the outer ring is moved from outside to inside in the radial direction to be assembled to the hook-shaped portion, elastic deformation of the hook-shaped portion is smoothly performed, and the outer ring can be easily clamped by the hook-shaped portion. As the results, the assembling work of the outer ring can be more easily performed by one worker.

According to the invention, the thickness of the split bearing in the...radial direction can be reduced, whereby a compact structure can be realized.

According to the invention, the outer ring can be more reliably clamped by the lock parts with respect to the radial direction.

According to the invention, it is possible to favorably apply the split bearing in a form of the rolling bearing to the crank journal of the crankshaft or the bearing part at the large end of the con-rod in the internal combustion engine.

[0020]

### BRIEF DESCRIPTION OF THE DRAWINGS

Fig. 1 is a perspective view showing a part of a crankshaft to which a split bearing according to the invention is applied.
Fig. 2 is a front view showing an outer ring of an integrating mechanism in a first embodiment.
Fig. 3 is a side view of the outer ring.
Fig. 4 is a front view showing a C-shaped ring of the integrating mechanism in the first embodiment.
Fig. 5 is a front view showing an outer ring of an integrating mechanism in a second embodiment.
Fig. 6 is a side view of the outer ring.
Fig. 7 is a perspective view showing a split tube of the integrating mechanism in the second embodiment.
Fig. 8 is a sectional front view of the split bearing in the third embodiment with its lower half portion cut away.
Fig. 9 is a front view of the split bearing in the third embodiment.
Fig. 10 is a side view showing an outer ring in the third embodiment.
Fig. 11 is a sectional front view of the split bearing in a fourth embodiment with its lower half portion cut away.

### DETAILED DESCRIPTION OF PREFERRED EMBODIMENTS

### First Embodiment

Now, an embodiment according to the invention will be described referring to the drawings. A split bearing in this embodiment is a rolling bearing of a needle roller bearing type, particularly in case where it is applied to a crank journal of a crankshaft and a bearing part at a large end of a con-rod in an internal combustion engine (engine).

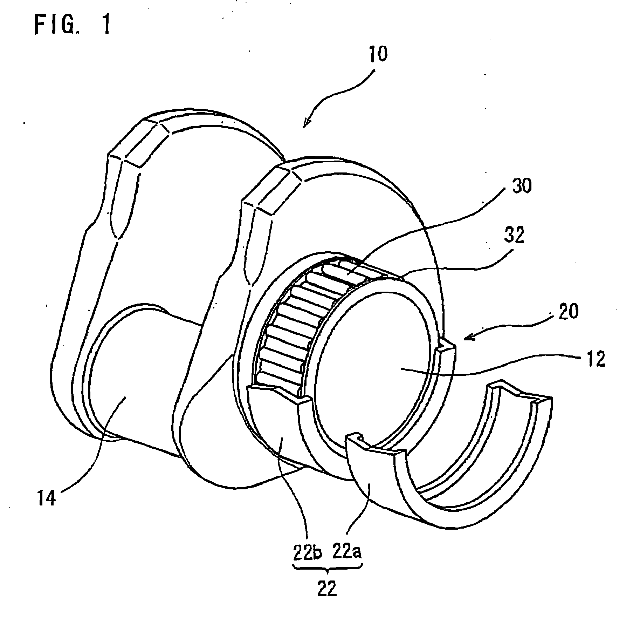

Fig. 1 is a perspective view showing a part of an ordinary crankshaft to be incorporated in an internal combustion engine. As shown in Fig. 1, a crankshaft 10 is formed in a crank shape, as an integral type. A crank journal 12 of this crankshaft 10 is pivotally held by a body part of the internal combustion engine (not shown) by way of a rolling bearing 20. As the rolling bearing 20, a rolling bearing of an integral type in a ring-like shape cannot be employed due to a particular shape of the crankshaft 10 which is integrally formed in a crank shape, and so, a split bearing which is divided in two in a circumferential direction is employed. In Fig. 1, numeral 14 represents a bearing part at a large end of a con-rod. The split bearing is also employed in the bearing part 14 at the large end of this con-rod, although not shown in the drawing.

As the rolling bearing 20 which is employed for the crank journal 12 in this embodiment, a rolling bearing of a needle roller bearing type is employed. The rolling bearing 20 of the needle roller bearing type includes an outer ring 22, needle rollers 30 as rolling elements, and a cage 32 for holding the needle rollers 30.. In this embodiment, an outer peripheral surface of the crank journal 12 functions as an inner ring. However, it is also possible to provide the inner ring separately.

Both the outer ring 22 and the cage 32 for holding the needle rollers 30 which are members of this rolling bearing 20 are divided in two in the circumferential direction. As the outer ring 22, a type having ribs is employed, although it will be described below.

On occasion of incorporating the crankshaft 10 into the bodypart of the internal combustion engine, the split bearings are respectively assembled to the crank journal 12 which is the bearing part of the crankshaft and the bearing part 14 at the large end of the con-rod, and an integrating mechanism are applied to the outer ring, so that the split bearing 20 may not be detached from the crankshaft 10 during transportation for assembling the crankshaft 10. It is to be noted that the integrating mechanism are not shown in Fig. 1.

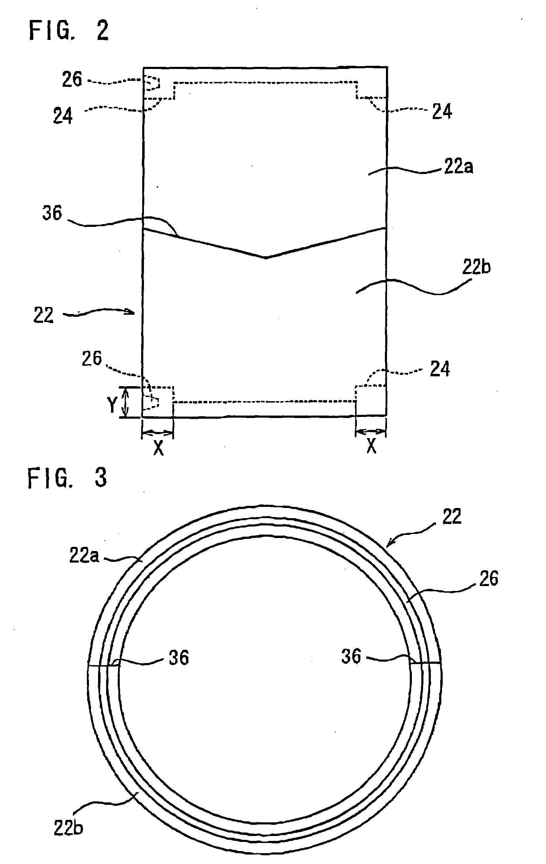

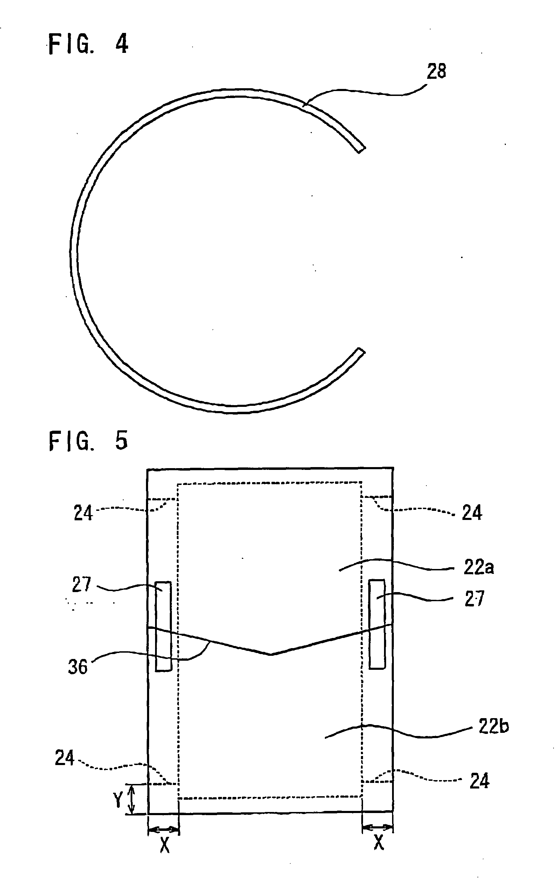

Then, the integrating mechanism for integrating the split bearing in a first embodiment will be described. Figs. 2 to 4 show the integrating mechanism in the first embodiment. Figs. 2 and 3 show the outer ring 22, wherein Fig. 2 is a front view, and Fig. 3 is a side view. Fig. 4 is a front view of a C-shaped ring 28 as a connecting member.

As well shown in Fig. 2, the outer ring 22 is provided with ribs 24 having a determined width at both sides in the axial direction (in a lateral direction as seen in Fig. 2). The ribs 24 each having a width X and a thickness Y in a radial direction are formed at the both sides. The thickness. Y is a little below about twice as large as the thickness of the outer ring at a center position where the cage for holding the needle rollers is arranged on an inner peripheral surface thereof.

Moreover, the outer ring 22 is divided in two in the circumferential direction, and includes two split outer ring pieces (an upper outer ring piece 22a in an upper part and a lower outer ring piece 22b in a lower part, as seen in Figs. 2 and 3) . Positions where the outer ring is divided in two are separated by about 180 degree, and dividing planes 36 are in a V-shape, as well shown in Fig. 2. This is for the purpose of reliably positioning the upper outer ringpiece with respect to the lower outer ring piece in the axial direction, when they are integrated.

The integrating mechanism in this first embodiment is provided on a side surface of the rib 24. More specifically, the integrating mechanism is provided on a left side surface of the rib 24 at the left side in Fig. 2. A concave groove 26 in an annular shape is formed on this side surface, as well shown in Fig. 3. The concave groove 26 has a depth which is smaller than the aforesaid width X of the rib 24.

A C-shaped ring 28 as shown in Fig. 4 is prepared as a connecting member corresponding to the concave groove 26 in the annular shape. The C-shaped ruing 28 is an elastic body formed of resin, and canbe elastically deformed. The C-shaped ring 28 is formed in a ring-like shape having a slightly smaller diameter than an annular shape of the concave groove 26 in the annular shape, and functions so as to hold the upper and lower outer ring pieces 22a, 22b of the outer ring which is divided in two, in a integrated state with an elastically deforming force, when the C-shaped ring 28 is engaged with the concave groove 26.

It is to be noted that the cage 32 for holding the needle rollers is also divided in two, corresponding to the outer ring 22 which is divided in two.

Then, working process for assembling the split bearing 20 in the above described first embodiment to the crank journal 12 of the crankshaft 10 in the integrated state will be described.

In this embodiment, the outer peripheral surface of the crank journal 12 is formed so as to function as the inner ring, in advance. Therefore, the cage 32 divided in two and holding the needle rollers 30 is directly mounted to the crank journal 12 in a manner of clamping the crank journal 12, and further, the.upper and lower outer ring pieces 22a, 22b of the outer ring which is divided in two are arranged so as to clamp the cage 32 from outside. In this case, it is also possible to fit the cage 32 divided in two and holding the needle rollers 30 to an inside of the upper and lower outer ring pieces 22a, 22b in advance, and then, to arrange the cage 32 together with the upper and lower outer ring pieces 22a, 22b so as to clamp the crank journal 12.

In either case, when the upper and lower outer ring pieces 22a, 22b are arranged so as to clamp the crank journal 12, the upper and lower outer ring pieces 22a, 22b are positioned and arranged both in the axial direction and in the circumferential direction, because the dividing planes 36 between the upper and lower outer ring pieces 22a, 22b have a V-shape. As the results, the concave groove 26 in the annular shape formed on the side surface of the rib 24 is also positioned both in the axial direction and in the circumferential direction. In this state, the C-shaped ring 28 is inserted into the concave groove 26 in the annular shape and engaged therewith to be locked. In this manner, the upper and lower outer ring pieces 22a, 22b are held in the integrated state with the elastic force of the C-shaped ring 28 which is reduced in diameter and deformed, whereby a preassembled state is obtained.

In this case, provided that the C-shaped ring 28 is engaged with the concave groove 26 in the annular shape across at least one of the dividing planes between the upper outer ring piece 22a and the lower outer ring piece 22b which are divided in two, it is possible to hold the upper and lower outer ring pieces 22a, 22b in the integrated state by holding function of the C-shaped ring 28. In case where the C-shaped ring 28 is engaged across the two dividing planes, more reliable holding performance can be obtained.

In the above described manner, the upper and lower outer ring pieces 22a, 22b which are divided in two are preassembled to the crank journal 12 of the crankshaft 10 in the integrated state. Therefore, the split bearing 20 which has been mounted to the crankshaft 10 will not be detached, even in case where it is transported for the purpose of being incorporated in the body part of the internal combustion engine.

According to the integrating mechanism in the above described first embodiment, the concave groove 26 in the annular shape as the integrating mechanism is provided on the side surface of the rib 24 which can be formed having substantially the same thickness as the thickness in a radial direction of the conventional slide bearing. Therefore, even in case where the split bearing 20 is the rolling bearing, the integrating mechanism can be easily formed, without badly affecting rolling performance of the rolling bearing itself.

Moreover, according to this first embodiment, because the integrating mechanism is provided on the side surface of the rib 24, the outer peripheral surface of the outer ring can be made flush, and the outer ring can be accurately incorporated into the bearing part. Further, reliability of the integrating mechanism too is enhanced, because the integrating mechanism has a simple structure including the concave groove 26 and the C-shaped ring 28.

### Second Embodiment

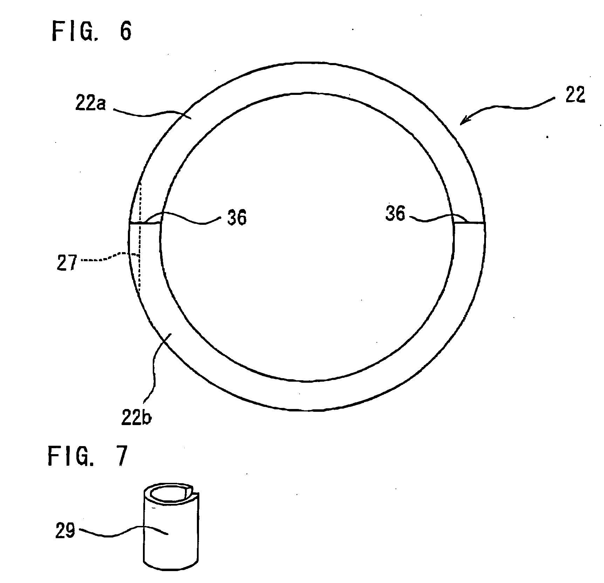

Then, the integrating mechanism for integrating the split bearing in a second embodiment will be described. Figs. 5 to 7 show the integrating mechanism in the second embodiment. Figs. 5 and 6 show the outer ring 22, wherein Fig. 5 is a front view, and Fig. 6 is a side view. Fig. 7 is a perspective view of a split tube 29 as the connecting member. It is to be noted that the same constituting parts as in the above described first embodiment will be denoted with the same reference numerals and detailed description of the same will be omitted.

As well shown in Fig. 5, the integrating mechanism in the second embodiment includes concave grooves 27 which are formed on the outer peripheral surfaces of the ribs 24 at the both sides of the outer ring 22 by cutting away in a rectilinear shape. These concave grooves 27 are formed on a part of the outer peripheral surface in the circumferential direction so as to go across the dividing plane 36 in a V-shape between the upper outer ring piece 22a and the lower outer ring piece 22b. In this embodiment, the concave grooves 27 are formed only on the dividing plane 36 at the left side, as seen in Fig. 6, and at two positions on the outer peripheral surfaces of the ribs 24 at both the right and left sides, as shown in Fig. 5. An axial position in which each of the concave grooves 27 is formed is within a range of the width X where the rib 24 is formed.

A split tube 29 as shown in Fig. 7 is prepared as the connecting member corresponding to the concave groove 27. The split tube 29 is an elastic body formed of resin having a larger size than a width of the concave groove 27 in a free state. The split tube 29 is elastically deformed thereby to be reduced in diameter, and inserted into the concave groove 27. In the inserted state, the split tube 29 is in a state completely merged in the concave groove 27, and will not project from the outer peripheral surface of the outer ring 22.

The split bearing 20 which has been divided in two is held in the integrated state, because the split tube 29 as the connecting member is elastically deformed and inserted into the concave groove 27 which is formed across the dividing plane 36.

Working process for integrally assembling the split bearing 20 in this second embodiment to the crank journal 12 of the crankshaft 10 will be conducted in the same manner as in the above described first embodiment, -although the integrating mechanism are different in structure. Specifically, the working processes are conducted in the same manner, except that there is a difference between a manner of engaging the C-shaped ring 28 with the concave groove 26 in the annular shape and a manner of inserting the split tube 29 into the concave groove 27 which is partially formed on the outer peripheral surface.

The above described integrating mechanism in the second embodiment is also formed on the rib 24 which has a relatively large thickness, and therefore, the concave groove 27 as the integrating mechanism can be easily formed. Moreover, because this concave groove 27 is formed on the outer peripheral surface, the work for forming the concave groove 27 can be easily conducted. Further, there is such advantage that it requires a smaller amount of the work, because the concave groove 27 as the integrating mechanism is partially formed in the circumferential direction of the outer peripheral surface.

Although the embodiments of the invention have been heretofore described, other embodiments of various types according to the invention can be considered.

For example, in the above described first embodiment of the integratingmechanism, the case where the concave groove 26 in the annular shape for forming the integrating mechanism is formed on the side surface of only one of the ribs at the both sides has been described. However, it is also possible to form the concave grooves in the annular shape on the side surfaces of the ribs at the both sides. In this case, the rolling bearing which has been divided can be more reliably integrated.

Moreover, in the above described second embodiment of the integrating mechanism, the case where the partial concave grooves 27 for forming the integrating mechanism are formed at the two positions in total corresponding to the ribs 24 at both sides of one of the dividing planes 3 6 has been described. However, it is possible to perform holding function, by providing the concave groove 27 at either one position. On the contrary, it is also possible to provide the concave grooves 27 across all the dividing planes 36 at the both sides. In case where the concave grooves are provided at all the positions, the holding function can be more reliably performed.

[0013-2]

### Third Embodiment

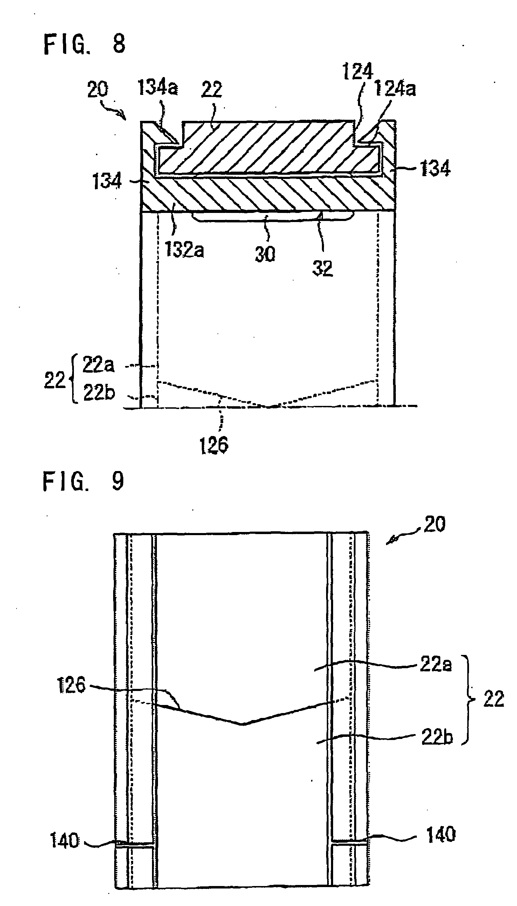

Next, a third embodiment of the present invention will be described with reference to Figs. 8 through 10. In the third embodiment of the invention, those portions similar in construction to the corresponding portions of the first embodiment will be designated by identical reference numerals, respectively, and explanation thereof will be omitted.

The outer ring 22 which is a constituent member of this rolling bearing 20 is divided in two so that it can be mounted to the shaft to which the outer ring is to be mounted, such as the crank journal 12, from outside in the radial direction. Moreover, the cage 32 for holding the needle rollers 30 is in a dual ended cylindrical shape which is cut out at one position in a circumferential direction. The cage 32 is elastically deformed, and fitted to the shaft to which the cage is to be mounted from the cut-out position so as not to be detached from the shaft.

On occasion of incorporating the crankshaft 10 into the body part of the internal combustion engine, the split bearings are respectively assembled to the crank journal 12 which is the bearing part of the crankshaft and the bearing part 14 at the large end of the con-rod, whereby the split bearing is formed into a integrated state with respect to the shaft, so that the split bearing 20 may not be detached from the crankshaft 10 during transportation for assembling the crankshaft 10.

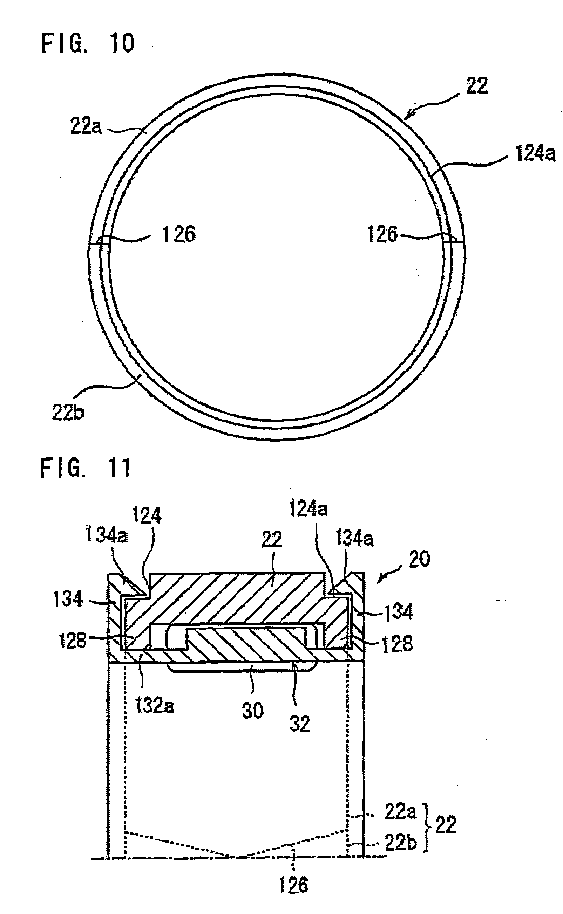

[0014-2] Then, means for integrating the split bearing in a third embodiment will be described. Figs. 8 to 10 show the third embodiment. Fig. 8 is a sectional front view of the split bearing with a lower half portion cut away, Fig. 9 is a front view showing the split bearing in its entirety, and Fig. 10 is a side view of the integrated outer ring.

As well shown in Figs. 9 and 10, the outer ring 22 is divided in two in the circumferential direction so that it can be assembled to the shaft to which the outer ring is to be assembled, and includes an upper outer ring piece 22a in an upper part and a lower outer ring piece 22b in a lower part. Positions where the outer ring is divided in two are separated by about 180 degree, and dividing planes 126 are in a V-shape, as well shown in Fig. 9. This is for the purpose of reliably positioning the upper outer ring piece 22a with respect to the lower outer ring piece 22b in the axial direction, when they are assembled into the integrated state.

The outer ring 22 is provided with stepped parts 124 which are cut away inwardly in the radial direction, on the outer peripheral surfaces of both side parts thereof in the axial direction (in a lateral direction as seen in Fig. 8), as well shown in Fig. 8. A bottom surface 124a of the stepped part 124 is adapted to be engaged with a hook-shaped portion 134a of a locking part 134 formed on the cage 32, which will be described below.

[0015-2] The cage 32 holds the needle rollers 30, as shown in Fig. 8, and is arranged on an inner periphery of the outer ring 22, in a state assembled as the bearing. A plurality of the needle rollers 30 are arranged in the circumferential direction. The cage 32 is formed of elastically deformable resin in its entirety. As shown in Fig. 9, this cage 32 formed of res.in has a dual ended cylindrical shape which is cut out at one position 140 of its peripheral surface, so that the cage 32 can be spread from this cut-out position 140 and fitted to the shaft to which the cage is to be mounted.

As shown in Fig. 8, the cage 32 is provided with lock parts 134 at both side positions thereof. The lock parts 134 are formed so as to extend outwardly in the radial direction alongboth sides of the outer ring 22, at the both side positions of the cage 32, and the hook-shaped portions 134a are formed in outward parts of the lock parts 134. These hook-shaped portions 134a are directed toward the bottom surfaces 124a of the aforesaid stepped parts of the outer ring 22, whereby the outer ring 22 is clamped with respect to the radial direction between a base part 132a of the cage 32 and these hook-shaped portions 134a of the lock parts 134.

When the outer ring 22 is clamped by the lock parts 134 of the cage 32, the divided outer ring 22 is assembled to a body part of the cage 32. On this occasion, the hook-shaped portions 134a of the lock parts 134 are elastically deformed and spread in the axial direction, whereby the both side parts of the outer ring 22 are assembled in a clamped state. In this manner, the divided outer ring 22 is attached to the cage 32 in the integrated state.

In this embodiment, the maximum outside size of the hook-shaped portion 134a of the lock part 134 is substantially the same as the maximum outside size of the outer ring 22, in a state where the outer ring 22 is clamped by the cage 32. Consequently., a thickness of the split bearing in the radial direction can be reduced, and a compact structure can be obtained. Moreover, it would be preferable that the maximum outside size of the hook-shaped portion 134a of the lock part 134 is made as smaller as possible than the maximum outside size of the outer ring 22.

[0016-2] Then, working process for assembling the split bearing 20 in the third embodiment to the crank journal 12 of the crankshaft 10 in the integrated state will be described.

In this embodiment, the outer peripheral surface of the crank journal 12 is formed so as to function as the inner ring, in advance. Therefore, as a first step, the cage 32 holding the needle rollers 30 is directly mounted to the crank journal 12. The cage 32 is elastically deformed to be spread at the cut-out position 140 of the dual ended cylindrical shape, and fitted to the crank journal 12 from this position 140. The cage 32 is in a C-shaped cylindrical shape which is cut out at the one position in the circumferential direction. Therefore, when.the cage 32 has been fitted to the crank journal 12, the cage is brought into a state mounted to the crank journal 12 by itself, and will not be detached from the crank journal 12, even though the cage 32 is not supported by the worker with hands. In this mounted state, the needle rollers 30 which are held by the cage 32 are mounted in a state arranged on the outer peripheral surface of the crank journal 12.

As described above, in the state where the cage 32 is mounted to the crank journal 12, the upper and lower outer ring pieces 22a, 22b of the outer ring which is divided in two are applied to the lock parts 134 of the cage 32 from outside in the radial direction to be assembled. On this occasion, the upper outer ring piece 22a and the lower outer ring piece 22b are arranged so as not to be overlapped in the circumferential direction, and assembled to each other, thereby to form a cylindrical shape in the assembled state, as shown in Fig. 10.

The outer ring 22 which has been divided in two is attached to the cage 32 in the state clamped by the lock parts 134. Specifically, the upper outer ring piece 22a and the lower outer ring piece 22b of the outer ring which has been divided in two are assembled to the hook-shaped portions 134a of the lock parts 134. On this occasion, the lock parts 134 at the both sides are spread in a direction away from each other by the side parts of the outer ring 22 which are engaged with the hook-shaped portions 134a, whereby the side parts of the outer ring are assembled into the hook-shaped portions 134a. When assembled into the hook-shaped portions 134a, the side parts of the outer ring 22 which has been divided in two are clamped between the base part 132a of the cage 32 and the hook-shaped portions 134a, whereby the outer ring 22 is held by the cage 32 in the integrated state.

In the above described manner, the upper and lower outer ring pieces 22a, 22b of the outer ring which is divided in two are preassembled to the crank journal 12 of the crankshaft 10 in the integrated state. As the results, the split bearing 20 which has been preassembled to the crankshaft 10 will not be detached, even in case where it is transported for the purpose of being incorporated in the body part of the internal combustion engine.

[0017-2] According to the split bearing 20 in the above described third embodiment, since the lock parts 134 are provided at the both side positions of the cage, the integrating work of the outer ring is conducted at the both side positions, and hence, the integrating work can be performed more reliably. In addition, because the outer ring 22 is clamped by using the lock parts 134 having the hook-shaped portions 134a, the outer ring 22 can be smoothly assembled.

[0018-2]

### Fourth Embodiment

Then, means for integrating the split bearing in a fourth embodiment will be described. Fig. 11 is a sectional front view of the split bearing in the fourth embodiment with its lower half portion cut away. It is to be noted that the same constituting parts as in the above described third embodiment will be denoted with the same reference numerals and detailed description of the same will be omitted.

In this fourth embodiment, the outer ring 22 has ribs 128 at both ends thereof. The ribs 128 are formed inwardly in the radial direction from the stepped parts 124 in the both side parts of the outer ring, and are arranged at both side positions in the axial direction of the needle rollers 30 which are held by the cage 32. In the rolling bearing 20 of this type, movement of the needle rollers 30 in the axial direction can be restricted by these ribs 128.

In this fourth embodiment, the structure of integrating the split bearing 20 is the same as the structure in the third embodiment, although the structure of the outer ring 22 is different, and accordingly, the structure for holding the needle rollers 30 by the cage 32 is different.

[0019-2] Although the embodiments of the invention have been heretofore described, other embodiments of various types according to the invention can be considered.

For example, in the above described embodiments, the lock parts 134 having the hook-shaped portions 134a are provided at both sides of the cage 32. However, it is possible to provide the lock part only at one side, in view of a space in the axial direction for the shaft to which the split bearing 20 is assembled.

Moreover, in the above described embodiments, the lock parts 134 and the hook-shaped portions 134a are provided on an entire circumference of the cage 32. However, it is possible to provide them at a determined interval. In this case, it is necessary to provide the lock parts 134 in at least one position of the respective parts of the outer ring 22 which is divided in two. Moreover, the split bearing according to the invention can be also employed as a bearing for supporting a cam shaft of an engine valve gear, besides the crankshaft.

## Claims

1. A split bearing comprising:
a pair of split outer ring pieces to be integrated in a circumferential direction to form an outer ring which includes ribs in axial opposite side parts thereof; and
an integrating mechanism for integrating the pair of split outer ring pieces to form the outer ring in a state preassembled to a shaft to which the outer ring is to be assembled, the integrating mechanism being provided at a position within a range in the axial direction where the rib of the outer ring is formed.

2. The split bearing according to claim 1, wherein
the integrating mechanism includes a concave groove in an annular shape which is formed on a side surface of said rib of the outer ring, and a connecting member to be engaged with the concave groove to integrate the split outer ring pieces to form the outer ring.

3. The split bearing according to claim 2, wherein the connecting member is a C-shaped ring.

4. The split bearing according to claim 1, wherein
the integrating mechanism includes a concave groove which is formed partially in a circumferential direction on an outer peripheral surface of the rib across a dividing position between the split outer ring pieces, and a connecting member to be inserted into the concave groove to integrate the split outer ring pieces to form the outer ring.

5. The split bearing according to claim 4, wherein the connecting member is a split tube.

6. The split bearing according to claim 1, wherein the shaft is a crank journal of a crankshaft or a bearing part at a large end of a con-rod in an internal combustion engine-.

7. A split bearing comprising:
a pair of split outer ring pieces to be integrated in a circumferential direction to form an outer ring; and
an elastically deformable dual ended cylindrical cage for holing rolling elements, the cage being arranged on an inner peripheral part of the outer ring and being integrated with the outer ring in a state preassembled to a shaft to which the outer ring is to be assembled,
wherein the cage is provided at an axial side position of the cage with a lock part for radially clamping axial ends of the split outer ring pieces to be integrated to form the outer ring.

8. The split bearing according to claim 7, wherein
the lock part is formed so as to extend radially outwardly from the axial side position of the cage and includes a hook-shaped portion for radially inwardly restricting an outer peripheral surface of a side part of the outer ring.

9. The split bearing according to claim 7, wherein a side part of the outer ring which is clamped by the lock part includes a stepped part which is cut away inwardly in the radial direction, and a maximum outside size of the lock part is substantially equal to or less than a maximum outside size of the outer ring in a state where the outer ring is clamped by the lock part.

10. The split bearing according to claim 7, wherein a plurality of the lock parts are provided at axial opposite sides of the cage.

11. The split bearing according to claim 7, wherein the shaft is a crank journal of a crankshaft or a bearing part at a large end of a con-rod in an internal combustion engine.
